# EUROPÄISCHE PATENTSCHRIFT

(11) **EP 1 354 264 B1**
(45) Veröffentlichungstag und Bekanntmachung des Hinweises auf die Patenterteilung: **08.06.2005**
(21) Anmeldenummer: 02704668.9
(22) Anmeldetag: 24.01.2002
(51) Int. Cl.: G06F 7/58

(54) **ZUFALLSZAHLENGENERATOR UND VERFAHREN ZUM ERZEUGEN EINER ZUFALLSZAHL**
RANDOM NUMBER GENERATOR AND METHOD FOR GENERATING A RANDOM NUMBER
GENERATEUR DE NOMBRES ALEATOIRES ET PROCEDE POUR GENERER UN NOMBRE ALEATOIRE

(30) Priorität: 24.01.2001 DE 10103071
(43) Veröffentlichungstag der Anmeldung: 22.10.2003
(73) Patentinhaber: Infineon Technologies AG, 81669 München (DE)
(72) Erfinder: DICHTL, Markus, 80636 München (DE)
(74) Vertreter: Zinkler, Franz, Dipl.-Ing.
(86) Internationale Anmeldenummer: PCT/EP2002/000732
(87) Internationale Veröffentlichungsnummer: WO 2002/061570

(56) Entgegenhaltungen:
- US-A- 4 176 399
- US-A- 4 855 690
- US-A- 6 061 702
- PETRIE C S ET AL: "A noise-based random bit generator IC for applications in cryptography" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31. Mai 1998 (1998-05-31), Seiten 197-200, XP010289163 ISBN: 0-7803-4455-3

## Beschreibung

Die vorliegende Erfindung bezieht sich auf Zufallszahlengeneratoren und insbesondere auf Zufallszahlengeneratoren, die in Verbindung mit kryptographischen Anwendungen eingesetzt werden können.

In der Technik gibt es viele Bereiche, in denen Zufallszahlen benötigt werden. Einige dieser Bereiche sind beispielsweise Simulationen, bei denen Zufallszahlen eingesetzt werden, um deterministische physikalische Prozesse simulieren zu können. Indem verschiedene Werte der Simulation zufällig verändert werden, kann erreicht werden, dass sich ein Simulationsverfahren, das in einem lokalen Maximum oder Minimum "gefangen" ist, von diesem lokalen Maximum oder Minimum wieder löst, um vielleicht doch noch das globale Maximum oder das globale Minimum finden zu können.

Zum Testen von Hardware oder Software werden ebenfalls Zufallszahlen eingesetzt. Diese Zufallszahlen werden benötigt, um, wenn es nicht möglich ist, sämtliche auftretenden digitalen Signalvektoren abzuprüfen, das Verhalten des Systems bei nicht systematisch erzeugten, zufälligen Signalvektoren zu untersuchen.

Eine sehr wichtige Anwendung für Zufallszahlengeneratoren ist die Kryptographie. Moderne Kryptographieverfahren basieren auf einem zufälligen Schlüssel, der so lang sein sollte wie die zu verschlüsselnden Daten. Ihre Sicherheit ist direkt auf die Zufälligkeit des Schlüssels bezogen. Allgemein sollte die Schlüsselerzeugung für kryptographische Schemen auf Zufallszahlen basieren, da Zufallszahlen das einzige sind, das ein potentieller Angreifer nicht raten kann. Dies gilt sowohl für symmetrische als auch für asymmetrische Verschlüsselungsver-fahren. Bei den meisten symmetrischen Verschlüsselungsverfahren werden Sequenzen von zufällig erzeugten Bits als Schlüssel verwendet. Bei asymmetrischen Verschlüsselungsverfahren ist die Struktur der Schlüssel oftmals komplexer. Beispielsweise basieren RSA-Schlüssel auf großen Primzahlen, die geheim bleiben müssen. Zufallszahlen sollten für die Erzeugung der Primzahlen eingesetzt werden. Sie können beispielsweise verwendet werden, um die Startzahl für eine sequentielle Suche nach Primzahlen zu liefern.

Weitere Anwendungen von Zufallszahlen sowie eine allgemeine Übersicht über die Erzeugung von Zufallszahlen sind in "A High Quality Physical Random Number Generator", M. Dichtl und N. Janssen, Eurosmart Security Conference - Proceedings, Marseille, 2000, Seiten 277-278offenbart.

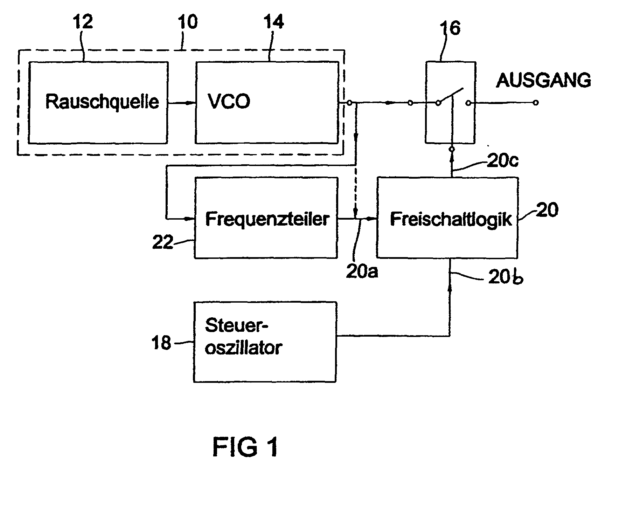

Das U.S.-Patent Nr. 6,061,702 offenbart einen Zufallszahlengenerator, gemäss den Merkmalen aus dem Oberbegriff der Ansprüche 1 und 11. Fig.1 zeigt eine Rauschquelle, mehrere Steueroszillatoren (25)..(30) und mehrere Freischalteinrichtungen (31)..(36). Die Patentschrift zeigt nicht, dass der Ausgang der Freischalteinrichtungen zur nochmaligen Abtastung des Rauschsignals verwendet wird.

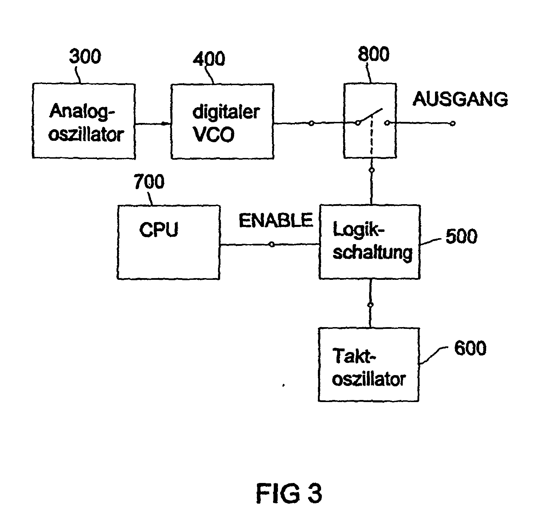

In dem U.S.-Patent Nr. 4,855,690 ist ein Zufallszahlengenerator beschrieben, welcher als Ausgangsgröße Abtastwerte eines Ausgangssignals eines Oszillators mit variabler Frequenz verwendet. Eine solche Schaltung ist in Fig. 3 dargestellt. Der Zufallszahlengenerator umfasst einen Analogoszillator 300, einen digitalen Spannungs-gesteuerten Oszillator 400, eine Logikschaltung 500, welche üblicherweise eine Flip-Flop-Schaltung umfasst, einen Taktoszillator 600, eine zentrale Verarbeitungseinheit (CPU) 700 sowie eine Abtasteinrichtung 800. Der Analogoszillator 300 erzeugt ein dreieckförmiges Signal, das in einen Steuereingang des digitalen spannungsgesteuerten Oszillators 400 eingespeist wird. Die Abtastung des Ausgangssignals des digitalen spannungsgesteuerten Oszillators geschieht dadurch, dass die Abtasteinrichtung durch die Logikschaltung 500 in einen Abtastzustand versetzt wird. Im Abtastzustand liegt an dem Ausgang des Zufallszahlengenerators der aktuelle Wert des Ausgangssignals des VCOs 400 an. Im Ruhezustand der Schalteinrichtung liegt dagegen am Ausgang ein Signal an. Die Abtasteinrichtung wird von der Logikschaltung dann in den Abtastzustand versetzt, wenn zwei Bedingungen erfüllt sind. Die erste Bedingung ist, dass die CPU 700 ein Enable-Signal ausgibt. Die zweite Bedingung besteht darin, dass das Ausgangssignals des Taktoszillators einen bestimmten Zustand hat, beispielsweise eine ansteigende Flanke. Eine Kette von zufälligen Ausgangswerten wird dann erzeugt, wenn die CPU das Enable-Signal ausgibt, was dann der Fall sein wird, wenn die CPU den Befehl erhalten hat, den Zufallszahlengenerator zu aktivieren, d. h. einzuschalten. Die Frequenz der zufälligen Werte an dem Ausgang des Zufallszahlengenerators entspricht genau der Frequenz des Taktoszillators 600, da die Logikschaltung 500 derart angeordnet ist, dass sie immer bei einem bestimmten Zustand des Ausgangssignals des Taktoszillators die Abtasteinrichtung 800 derart ansteuert, dass sie einen Abtastwert am Ausgang liefert. Dies bedeutet jedoch gleichzeitig, dass die Frequenz der Ausgangswerte bzw. die zeitliche Steuerung des Abtastens unabhängig von der Frequenz des Analogoszillators 300 oder des digitalen VCO 400 ist. Die Ausgangs-Abtastwerte haben immer die gleiche Frequenz wie der Taktoszillator, wobei die Frequenz des Analogoszillators 300 bzw. die Frequenz des digitalen VCO 400 in der Folge von Abtastwerten am Ausgang des Zufallszahlengenerators nicht mehr zu erkennen ist.

Nicht in allen Fällen ist es wünschenswert, dass die Frequenz der Ausgangs-Abtastwerte unabhängig von der Frequenz des Analogoszillators bzw. des spannungsgesteuerten Digitaloszillators ist. Eine Gefährdung der Sicherheit mancher Anwendungen, z. B. bei Geldkarten, liegt dann vor, wenn der als Zufallsquelle dienende Oszillator zu häufig abgetastet wird, so dass die erhaltenen Werte stark korreliert sind. Ein solches zu häufiges Abtasten könnte von einem Angreifer absichtlich herbeigefürt werden, wenn es ihm gelingt, die Frequenz des Taktoszillators 600 zu erhöhen. Diese Bedrohung ist besonders bei Chipkartensystemen realistisch, weil diese häufig mit von extern eingespeistem Takt arbeiten.
Andererseits kann aber, wenn die Frequenzen der Oszillatoren 300 und 400 erhöht werden, auch die Abtastfrequenz erhöht werden, so dass die vorhandenen Resourcen durch die höhere Datenrate der Zufallszahlenerzeugung besser genutzt werden.

Die Aufgabe der vorliegenden Erfindung besteht darin, einen Zufallszahlengenerator, ein Verfahren zum Erzeugen einer Zufallszahl oder eine Smart Card zu schaffen, welche eine möglichst gute Ausnutzung vorhandener Funktionalitäten aufweisen, aber eine Reduktion der Sicherheit durch zu häufiges Abtasten der Zufallsquelle ausschließt.

Diese Aufgabe wird durch einen Zufallszahlengenerator nach Patentanspruch 1, durch ein Verfahren zum Erzeugen einer Zufallszahl nach Patentanspruch 11 sowie durch eine Smart Card nach Patentanspruch 12 gelöst.

Der vorliegenden Erfindung liegt die Erkenntnis zugrunde, dass die Funktionalität einer Rauschsignalerzeugungseinrichtung, welche in den allermeisten Fällen einen steuerbaren Oszillator aufweist, dann optimal genutzt wird, wenn das Ausgangssignal der Rauschsignalerzeugungseinrichtung, also typischerweise das Ausgangssignal eines steuerbaren Oszillator, dazu verwendet wird, die Frequenz des Ausgangssignals des Zufallszahlengenerators zu beeinflussen. Insbesondere in den Fällen, in denen die Rauschsignalerzeugungseinrichtung einen steuerbaren Oszillator aufweist, kann durch Ausnutzung der Steuerfunktionen eines solchen Oszillators, der ja bereits einen Aussteuerbereich hat, über den seine Ausgangsfrequenz eingestellt werden kann, auf eine Frequenzsteuerung zur Ansteuerung des Taktoszillators entweder ganz oder zumindest teilweise verzichtet werden.

Es sei jedoch darauf hingewiesen, dass auch in den Fällen, in denen die Rauschsignalerzeugungseinrichtung keinen spannungsgesteuerten Oszillator aufweist, und in denen der Taktoszillator dennoch voll frequenzmäßig gesteuert werden kann, ein Vorteil dahingehend erreicht wird, dass die Frequenz des Ausgangssignals des Zufallszahlengenerators von der Frequenz des Ausgangssignals der Rauschsignalerzeugungseinrichtung abhängt, während lediglich die Augenblicksphase des Ausgangssignals des Zufallszahlengenerators durch einen Steueroszillator bestimmt wird. Nachdem der Steueroszillator keine Frequenz-Festlegungsfunktion mehr für das Ausgangssignal des Zufallszahlengenerators hat, sinken die Anforderungen an denselben erheblich hinsichtlich z. B. der Stabilität des Steueroszillators. Damit ist es auf preisgünstige Art und Weise möglich, beispielsweise auf der Smart Card selbst einen Taktoszillator mit einfachen und damit preisgünstigen Mitteln unterzubringen. Es werden keine äußeren Anschlüsse mehr zum Empfang eines Taktsignals von einer äußeren Schaltung mehr benötigt, so dass die Smart Card einen weiteren Eingang weniger hat. In diesem Zusammenhang sei darauf hingewiesen, dass die Bestrebung besteht, Smart Cards mit einer möglichst geringen Anzahl von Ein- und Ausgängen zu versehen. Damit soll verhindert werden, dass ein potentieller Angreifer, der die volle Gewalt über die Smart Card hat, z. B. den Takteingang irgendwie verwendet, um einen neuen Angriff auf den Kryptoalgorithmus zu fahren. Insbesondere der Zufallszahlengenerator des Kryptoprozessors, welcher ein sicherheitstechnisch hochrelevantes Kernstück desselben darstellt, ist so gut als möglich zu schützen.

Der erfindungsgemäße Zufallszahlengenerator umfasst eine Rauschsignalerzeugungseinrichtung und eine Abtasteinrichtung, die zwischen einen Ausgang der Rauschsignalerzeugungseinrichtung und einen Ausgang des Zufallszahlengenerators geschaltet ist, wobei das Rauschsignal abgetastet wird, wenn die Abtasteinrichtung in einem Abtast-Zustand ist, und wobei das Rauschsignal nicht abgetastet wird, wenn die Abtasteinrichtung in einem Ruhezustand ist. Der Zufallszahlengenerator umfasst ferner einen Steueroszillator zum Liefern eines Wechselsignals an einem Steueroszillatorausgang, wobei die Frequenz des Wechselsignals an dem Steueroszillatorausgang nicht starr an die Frequenz des Rauschsignals gekoppelt ist, idealerweise sogar unabhängig vom Rauschsignal ist. Schließlich umfasst der Zufallszahlengenerator eine Freischalteinrichtung mit einem ersten und einem zweiten Steuereingang und mit einem Ausgang, wobei der erste Steuereingang angeordnet ist, um das Rauschsignal oder ein von dem Rauschsignal abgeleitetes Signal zu empfangen, wobei der zweite Steuereingang angeordnet ist, um das Oszillatorausgangsignal oder ein von demselben abgeleitetes Signal zu empfangen, und wobei an dem Ausgang der Freischalteinrichtung ein Ausgangssignal erzeugbar ist, durch das die Abtasteinrichtung von dem Ruhezustand in den Abtastzustand umschaltbar ist. Die Freischaltlogik ist insbesondere ausgestaltet, um das Ausgangssignal nur dann zu erzeugen, wenn das Signal an dem ersten Eingang einen erster Trigger-Zustand aufweist, und wenn anschließend das Signal an dem zweiten Eingang einen zweiten Trigger-Zustand hat.

Das erfindungsgemäße Konzept zum Erzeugen von Zufallszahlen besteht also in einer oftmals wiederholten zweistufigen Freischaltung der Abtasteinrichtung. Den "äußeren" Rahmen legt dabei das Rauschsignal oder ein von dem Rauschsignal abgeleitetes Signal fest, während den "inneren" Rahmen des Abtastens der Steueroszillator bestimmt. Dies bedeutet anders ausgedrückt, dass pro Periode des Rauschsignals oder des von dem Rauschsignal abgeleiteten Signals ein Abtastwert erzeugt wird, wenn die Frequenz des Steueroszillators gleich oder größer als die Frequenz des Rauschsignals oder des von dem Rauschsignal abgeleiteten Signals ist. Dies bedeutet wiederum in anderen Worten, dass die Frequenz des Ausgangssignals, also die Frequenz der Abtastwerte, von der Frequenz des Rauschsignals bzw. von der Frequenz des von dem Rauschsignal abgeleiteten Signals abhängt, dass jedoch die Augenblicksphase der Abtastwerte, also die Lage der Abtastwerte in einer Periode des Rauschsignals oder des von dem Rauschsignal abgeleiteten Signals durch den Taktoszillator bestimmt wird.

Das erfindungsgemäße Konzept erlaubt es, in der Rauschsignalerzeugungseinrichtung vorhandene Frequenzsteuerfunktionalitäten auszunutzen. Wenn nämlich die mittlere Frequenz der Ausgangs-Abtastwerte verändert werden soll, so muss z. B. ein VCO in der Rauschsignalerzeugungseinrichtung einfach anders vorgespannt werden.

Die Zufälligkeit der Ausgangs-Abtastwerte wird durch die variable Augenblicksphase des Steueroszillators verbessert. Wie es aus den obigen Ausführungen ersichtlich wird, haben die Ausgangs-Abtastwerte am Ausgang des Zufallszahlengenerators keine konstante Augenblicksfrequenz, wie es im Stand der Technik der Fall ist, sondern eine variierende Augenblicksfrequenz, welche nur im Mittel konstant ist. Dies spielt jedoch bei den meisten kryptographischen Anwendungen keine Rolle, da es auf die Folge von Einsen und Nullen ankommt, jedoch nicht auf die Abstände zwischen den entsprechenden Flanken eines digitalen Signals. In Fällen, in denen die Ausgangs-Abtastwerte mit einer konstanten Frequenz erwartet werden, kann dem Ausgang des erfindungsgemäßen Zufallszahlengenerators ohne weiteres eine Speicherschaltung (Puffer) nachgeschaltet werden, um die Ausgangs-Abtastwerte frequenzmäßig zu vergleichmäßigen.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild eines erfindungsgemäßen Zufallszahlengenerators;
- Fig. 2: ein Zeitdiagramm zur Erläuterung der Funktion des in Fig. 1 gezeigten Zufallszahlengenerators; und
- Fig. 3: ein Blockschaltbild eines bekannten Zufallszahlengenerators.

Der erfindungsgemäße Zufallszahlengenerator umfasst eine Rauschsignalerzeugungseinrichtung 10. Die Rauschsignalerzeugungseinrichtung 10 umfasst vorzugsweise eine Rauschquelle 12 und einen steuerbaren Oszillator 14, welcher aufgrund der Einfachheit der Schaltung als Spannungs-gesteuerter Oszillator ausgeführt ist. Grundsätzlich kann jedoch jeder andere steuerbare Oszillator verwendet werden.

Als Rauschquelle können beliebige Schaltungen eingesetzt werden, wie z. B. ein thermisch rauschender Widerstand, dessen Ausgangssignal stark verstärkt ist, eine Diode in Sperrrichtung, deren Schrotrauschen stark verstärkt wird, ein stark rauschender Transistor oder aber auch eine analoge oder digitale Schaltung, welche eine Ausgangsignalform erzeugt, die einen relativ zufälligen Verlauf hat. Es sei darauf hingewiesen, dass weder das Ausgangssignal der Rauschquelle 12 noch das Ausgangssignal des VCO 14 ideal rauschend sein müssen, also rein statistisch völlig zufällig verteilt. Abgesehen von der Tatsache, dass solche Signalverläufe relativ schwierig mit überschaubaren Mitteln zu erzeugen sind, genügt jedoch auch ein gewisser Grad an Zufälligkeit, so dass auch sämtliche Pseudorauschquellen und dergleichen verwendet werden können. Es sei darauf hingewiesen, daß gemäß der verwendeten Terminologie der Ausdruck "Rauschsignal" nicht auf ein ideales Rauschsignal begrenzt ist, das eine optimal verteilte Wahrscheinlichkeit hat. Statt dessen umfaßt der Ausdruck "Rauschsignal" auch Wechselsignale, die keine optimale Wahrscheinlichkeitsverteilung haben, sondern einen gewissen minimalen Grad an Zufälligkeit oder Nicht-Voraussagbarkeit, der für die meisten Anwendungen genügt.

Der erfindungsgemäße Zufallszahlengenerator umfasst ferner eine Abtasteinrichtung 16, die in Fig. 1 aus Gründen der Darstellung einfach als normaler Schalter mit einem Eingang, einem Ausgang und einem Steuereingang dargestellt ist. Die Abtasteinrichtung kann im einfachsten Fall zwei Zustände einnehmen, nämlich einen Ruhezustand, bei dem an dem Ausgang des Zufallszahlengenerators kein Signal anliegt, (dieser Zustand ist in Fig. 1 gezeichnet), oder einen Abtastzustand, der dadurch dargestellt werden kann, dass der Schalter der Einrichtung 16 geschlossen ist, so dass an dem Ausgang des Zufallszahlengenerators ein Ausgangssignal anliegt.

Der erfindungsgemäße Zufallszahlengenerator umfasst ferner einen Steueroszillator 18, welcher ein Wechselsignal an einem Oszillatorausgang liefert, wobei die Frequenz des Wechselsignals des Steueroszillators nicht starr mit der Frequenz des Rauschsignals gekoppelt ist. Idealerweise sind das Wechselsignal und das Rauschsignal unabhängig voneinander.

Der in Fig. 1 gezeigte Zufallszahlengenerator umfasst ferner eine Freischalteinrichtung 20, welche auch als Freischaltlogik bezeichnet wird.

Die Freischalteinrichtung 20 umfasst einen ersten Eingang 20a, einen zweiten Eingang 20b sowie einen Ausgang 20c.

Wie es in Fig. 1 gezeigt ist, ist der Ausgang des Steueroszillators 18 mit dem zweiten Eingang 20b verbunden.

Der erste Eingang 20a der Freischaltlogik 20 kann entweder direkt mit dem Ausgang der Rauschsignalerzeugungseinrichtung 10 verbunden sein, wie es in Fig. 1 gestrichelt dargestellt ist, oder mit dem Ausgang eines Frequenzteilers 22, wie es in Fig. 1 mittels einer durchgezogenen Linie symbolisiert ist.

Ist der erste Eingang 20a der Freischaltlogik 20 direkt mit dem Ausgang des VCO verbunden, so erhält die Freischaltlogik über ihren ersten Eingang das Rauschsignal am Ausgang der Rauschsignalerzeugungseinrichtung. Ist dagegen der Frequenzteiler 22 zwischen den Ausgang der Rauschsignalerzeugungseinrichtung und den ersten Eingang 20a der Freischaltlogik geschaltet, so erhält die Freischaltlogik über ihren ersten Eingang nicht das Rauschsignal direkt, sondern ein von dem Rauschsignal abgeleitetes Signal.

Es sei darauf hingewiesen, dass das Ausgangssignal eines üblichen Frequenzteilers synchron zum Eingangssignal verläuft, jedoch mit einer entsprechend erniedrigten Frequenz. Das Ausgangssignal des Frequenzteilers ist somit von dem Eingangssignal des Frequenzteilers abhängig, wobei selbstverständlich die Frequenz des Ausgangssignals des Frequenzteilers von der Frequenz des Eingangssignals in den Frequenzteiler abhängt.

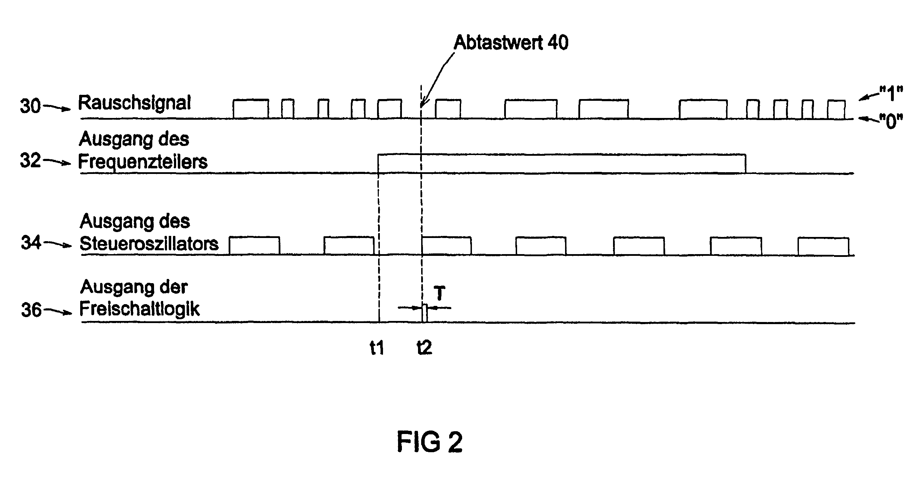

Im nachfolgenden wird bezugnehmend auf Fig. 2 die Funktion des erfindungsgemäßen Zufallszahlengenerators beschrieben.

Fig. 2 zeigt in einer ersten Zeile einen beispielhaften Verlauf des Rauschsignals. Wie es aus Fig. 2 zu sehen ist, kann das Rauschsignal eine Folge von digitalen Werten sein, welche entweder eine "Eins" oder eine "Null" sein können. Es sei darauf hingewiesen, dass das Rauschsignal nicht unbedingt ein digitales Rauschsignal sein muss, sondern genauso gut ein analoges Rauschsignal ist, bei dem die Amplitude des Rauschsignals zwischen einem maximalen positiven Wert und einem maximalen negativen Wert mit veränderlicher Frequenz variiert.

In einer zweiten Zeile 32 ist das Ausgangssignal des Frequenzteilers 22 (Fig. 1) aufgetragen. In einer dritten Zeile 34 befindet sich das Ausgangssignal des Steueroszillators 18 (Fig. 1) und in einer letzten Zeile 36 ist das Ausgangssignal der Freischaltlogik 20 (Fig. 1) aufgetragen.

Zunächst ist das Ausgangssignal der Freischaltlogik auf einem Wert von Null, was bedeutet, dass die Abtasteinrichtung in ihrem Ruhezustand ist, d. h. kein Signal liegt am Ausgang des Zufallszahlengenerators an. Dies bleibt so, bis das Ausgangssignal des Frequenzteilers zu einem Zeitpunkt t1 einen Übergang von "Null" auf "Eins" durchführt. Auch dann bleibt der Ausgang der Freischaltlogik noch auf "Null". Dies ist so lange der Fall, bis das Ausgangssignal des Steueroszillators zu einem Zeitpunkt t2 ebenfalls einen Übergang von einer logischen "Null" zu einer logischen "Eins" aufweist. Zum Zeitpunkt t1 befindet sich somit das Signal an dem ersten Eingang 20a, d. h. das Ausgangssignal des Frequenzteilers, in einem ersten Triggerzustand. Zu einem Zeitpunkt t2, der auf den Zeitpunkt t1 folgt, hat auch das Signal an dem zweiten Steuereingang 20b der Freischaltlogik 20 seinen Trigger-Zustand erreicht. Dann ist das Ausgangssignal der Freischaltlogik 20c in einem hohen Zustand, was dazu führt, dass die Abtasteinrichtung in ihren Abtastzustand geht, so dass an dem Ausgang des Zufallszahlengenerators bei dem in Fig. 2 gezeigten Beispiel eine "Null" ausgegeben wird, wie es durch einen Abtastwert 40 in Fig. 2 dargestellt ist. Der Zufallszahlengenerator gibt somit bei dem in Fig. 2 gezeigten Beispiel am Ausgang eine "Null" aus. Nach einer kleinen Abtastperiode, die in Fig. 2 mit T bezeichnet ist, geht die Abtasteinrichtung 16 (Fig. 1) wieder in ihren Ruhezustand zurück, d. h. der Schalter wird wieder geöffnet und der Zufallszahlengenerator ist wieder zur Ausgabe eines neuen Abtastwerts bereit. Dies wird wiederum nur dann auftreten, wenn das Ausgangssignal des Frequenzteilers zunächst eine positive Flanke hat, und wenn dann das Ausgangssignal des Steueroszillators ebenfalls eine positive Flanke hat. Damit wird deutlich, dass, vorausgesetzt, die Frequenz des Steueroszillators ist niedriger als die Frequenz des Ausgangssignals des Frequenzteilers, der Zufallszahlengenerator immer dann einen Abtastwert ausgibt, wenn das Ausgangssignal des Frequenzteilers in einem logisch hohen Zustand ist. Dies bedeutet wiederum, dass die mittlere Frequenz der Ausgangs-Abtastwerte gleich der Frequenz des Ausgangssignals des Frequenzteilers ist, welche, wie es ausgeführt worden ist, von der Frequenz des Rauschsignals abgeleitet ist. Aus Fig. 2 wird deutlich, dass je nach Wahl der Frequenz des Steueroszillators der Abtastwert entweder unmittelbar nach einer ansteigenden Flanke des Ausgangssignals des Frequenzteilers auftreten kann, oder aber erst unmittelbar vor der fallenden Flanke des Ausgangssignals des Frequenzteilers.

Die Augenblicksphase des Abtastwerts, d. h. des Ausgangssignals des Rauschgenerators bezüglich des Ausgangssignals des Frequenzteilers und somit auch bezüglich des Rauschsignals selbst wird von dem Steueroszillator bestimmt.

Es sei darauf hingewiesen, dass in Fig. 2 ein Teilerverhältnis des Frequenzteilers von 1:5 beispielhaft angenommen worden ist, wobei die Frequenz des Steueroszillators deutlich größer als die Frequenz des Ausgangssignals des Frequenzteilers ist. Dies bedeutet, dass die Ausgangs-Abtastwerte des Zufallszahlengenerators lediglich in einer Periode des Ausgangssignals des Frequenzteilers erzeugt werden, die maximal gleich der Periodendauer des Steueroszillatorausgangssignals ist. In diesem Fall müsste eine ansteigende Flanke des Ausgangssignals des Steueroszillators unmittelbar vor der ansteigenden Flanke des Ausgangssignals des Frequenzteilers auftreten. In diesem Fall wird erst bei einer nächsten ansteigenden Flanke des Ausgangssignals des Steueroszillators ein Ausgangs-Abtastwert erzeugt.

Je nach Frequenz des Rauschsignals können beliebige Teilerverhältnisse eingestellt werden, wobei bei einem bevorzugten Ausführungsbeispiel der vorliegenden Erfindung ein Teilerverhältnis von 1:100 gewählt wird. Um einen möglichst großen Phasen-Bereich bezüglich des Ausgangssignals des Frequenzteilers abwägen zu können, wird es ferner bevorzugt, die Frequenz des Ausgangssignals des Steueroszillators auf einen Wert einzustellen, der um einige Prozent über der Frequenz des Ausgangssignals des Frequenzteilers liegt.

Obwohl im vorhergehenden davon gesprochen wurde, dass der erste Trigger-Zustand und der zweite Trigger-Zustand jeweils ansteigende Flanken der betreffenden Signale sind, ist es beispielsweise auch möglich, fallende Flanken zu nehmen, oder eine ansteigende Flanke des einen Signals und eine fallende Flanke des anderen Signals. Wenn die Schaltung analog betrieben wird, so kann anstatt der fallenden Flanke oder der steigenden Flanke als Triggerzustand ebenfalls ein bestimmter entweder positiver oder negativer Spannungswert oder aber auch ein bestimmter Wert der Ableitung der Spannung mit der Zeit verwendet werden. An der allgemeinen Funktionsweise ändert dies nichts, Auswirkungen bestehen lediglich hinsichtlich des konkreten Entwurfs der Freischaltlogik, die z. B. eine Anordnung aus Flip-Flops, Komparatoren und/oder logischen Gattern sein kann.

Gemäß der vorliegenden Erfindung wird somit eine Rauscherzeugungseinrichtung verwendet, welche vorzugsweise einen steuerbaren Oszillator aufweist, welcher abgetastet wird. Die Frequenz des Abtastens wird jedoch nicht durch den Steueroszillator festgelegt, sondern vorzugsweise durch einen Frequenzteiler mit einem konstanten Teilerfaktor aus dem Rauschsignal am Ausgang des Oszillators abgeleitet. Alternativ kann auch auf die Frequenzteilung verzichtet werden, so dass das Rauschsignal unmittelbar zum "Scharfmachen" der Freischaltlogik verwendet wird.

Das aus der Frequenzteilung gewonnene Signal löst somit nicht direkt den Sample-Vorgang aus. Das Samplen wird, nachdem die Frequenzteilung den Sample-Vorgang freigegeben oder "scharf gemacht" hat, durch die nächste Flanke des Steueroszillators ausgelöst, dessen Frequenz unabhängig von der der Rauschsignalerzeugungseinrichtung ist. Somit ist die Frequenz, mit der abgetastet wird, abhängig von der Frequenz der Rauschsignalerzeugungseinrichtung. Lediglich die Phasenlage der Folge von Ausgangs-Abtastwerten bezüglich einer Periodendauer des Rauschsignals ist unabhängig von der Frequenz des Wechselsignals am Ausgang der Rauschsignalerzeugungseinrichtung.

## Patentansprüche

1. Zufallszahlengenerator mit folgenden Merkmalen:
einer Rauschsignalerzeugungseinrichtung (10) zum Liefern eines Rauschsignals ;
einem Steueroszillator (18) zum Liefern eines Wechselsignals an einem Steueroszillatorausgang, wobei die Frequenz des Wechselsignals des Steueroszillators nicht starr mit der Frequenz des Rauschsignals gekoppelt ist;
einer Freischalteinrichtung (20) mit einem ersten Steuereingang (20a) und mit einem zweiten Steuereingang (20b) und mit einem Ausgang (20c),
wobei der erste Steuereingang (20a) angeordnet ist, um das Rauschsignal oder ein von dem Rauschsignal abgeleitetes Signal zu empfangen,
wobei der zweite Steuereingang (20b) angeordnet ist, um das Oszillatorausgangssignal oder ein von demselben abgeleitetes Signal zu empfangen, und
wobei die Freischalteinrichtung (20) angeordnet ist, um ein Ausgangssignal zu erzeugen, wenn das Signal an dem ersten Steuereingang (20a) einen ersten Trigger-Zustand aufweist, und wenn anschließend das Signal an dem zweiten Steuereingang (20b) einen zweiten Trigger-Zustand aufweist,
**gekennzeichnet dadurch**
eine Abtasteinrichtung (16), die zwischen einem Ausgang der Rauschsignalerzeugungseinrichtung und einem Ausgang des Zufallszahlengenerators geschaltet ist, wobei das Rauschsignal abgetastet wird, wenn die Abtasteinrichtung (16) in einem Abtast-Zustand ist, und wobei das Rauschsignal nicht abgetastet wird, wenn die Abtasteinrichtung (16) in einem Ruhe-Zustand ist, und
wobei an dem Ausgang (20c) der Freischalteinrichtung (20) ein Ausgangssignal erzeugbar ist, durch das die Abtasteinrichtung (16) von dem Ruhe-Zustand in den AbtastZustand umschaltbar ist.

2. Zufallszahlengenerator nach Anspruch 1,
bei dem die Freischalteinrichtung (20) angeordnet ist, um nach einer Abtastperiode selbsttätig ein Ausgangssignal zu erzeugen, durch das die Abtasteinrichtung (16) in den RuheZustand gebracht wird, oder
bei dem die Abtasteinrichtung (16) angeordnet ist, um nach einer vorbestimmten Abtastperiode selbstständig wieder in den Ruhe-Zustand zurückzukehren.

3. Zufallszahlengenerator nach Anspruch 1 oder 2,
bei dem die Freischalteinrichtung (20) angeordnet ist, um auf den ersten Trigger-Zustand in Form einer ansteigenden Flanke des Signals an dem ersten Steuereingang (20a) anzusprechen, und
um auf den zweiten Trigger-Zustand in Form einer ansteigenden Flanke des Signals an dem zweiten Steuereingang (20b) anzusprechen.

4. Zufallszahlengenerator nach einem der vorhergehenden Ansprüche, der ferner folgendes Merkmal aufweist:
einen Frequenzteiler (22), der einen Eingang und einen Ausgang aufweist, wobei der Eingang des Frequenzteilers (22) mit der Ausgang der Rauschsignalerzeugungseinrichtung (10) gekoppelt ist, und
wobei der Ausgang des Frequenzteilers mit dem ersten Steuereingang (20a) gekoppelt ist, um der Freischalteinrichtung (20) das von dem Rauschsignal abgeleitete Signal zu liefern,
wobei das von dem Rauschsignal abgeleitete Signal eine Frequenz hat, die gemäß einem Teilerverhältnis des Frequenzteilers (22) einem Bruchteil der Frequenz des Rauschsignals entspricht.

5. Zufallszahlengenerator nach Anspruch 4,
bei dem das Teilerverhältnis des Frequenzteilers (22) in einem Bereich zwischen 1:50 und 1:150 liegt.

6. Zufallszahlengenerator nach Anspruch 4 oder 5,
bei dem die Frequenz des Wechselsignals an dem Steueroszillatorausgang in der Größenordnung der Frequenz des von dem Rauschsignal abgeleiteten Signals ist.

7. Zufallszahlengenerator nach einem der vorhergehenden Ansprüche,
bei dem die Rauschsignalerzeugungseinrichtung (10) folgende Merkmale aufweist:
eine Rauschquelle (12) mit einem Ausgang zum Liefern einer Rauschsignalform; und
einen steuerbaren Oszillator (14) mit einem Steuereingang und einem Signalausgang,
wobei der Ausgang der Rauschquelle (12) mit dem Steuereingang des steuerbaren Oszillators (14) verbunden ist.

8. Zufallszahlengenerator nach Anspruch 4, bei dem der Frequenzteiler (22) einen digitalen Zähler aufweist.

9. Zufallszahlengenerator nach einem der vorhergehenden Ansprüche,
bei dem die Rauschsignalerzeugungseinrichtung (10) ein digitales Rauschsignal liefert.

10. Zufallszahlengenerator nach einem der vorhergehenden Ansprüche,
bei dem das Rauschsignal oder das von dem Rauschsignal abgeleitete Signal eine höchste und eine niedrigste Frequenz aufweist, und
bei dem die Frequenz des Wechselsignals des Steueroszillators (18) größer als die niedrigste Frequenz des Rauschsignals oder des von dem Rauschsignal abgeleiteten Signals ist.

11. Verfahren zum Erzeugen von Zufallszahlen, mit folgenden Schritten:
Liefern (10) eines Rauschsignals;
Liefern (18) eines Steuer-Wechselsignals, wobei die Frequenz des Steuer-Wechselsignals nicht starr mit der Frequenz des Rauschsignals gekoppelt ist;
Signalisieren eines Abtast-Zustand, wenn das Rauschsignal oder das von dem Rauschsignal abgeleitete Signal in einem ersten Trigger-Zustand ist, und wenn anschließend das Steuer-Wechselsignal einen zweiten Trigger-Zustand aufweist;
**gekennzeichnet durch** das
Abtasten des Rauschsignals, wenn ein Abtast-Zustand vorhanden ist, und Nicht-Abtasten des Rauschsignals, wenn ein Ruhe-Zustand vorhanden ist.

12. Smart Card mit einem Zufallszahlengenerator nach einem der Ansprüche 1 bis 10.

## Claims

1. Random number generator comprising:
a noise signal generating device (10) for supplying a noise signal;
a control oscillator (18) for supplying an alternating signal at a control oscillator output, the frequency of the alternating signal of the control oscillator not being rigidly coupled to the frequency of the noise signal;
an enabling device (20) having a first control input (20a) and a second control input (20b) and an output (20c),
the first control input (20a) being arranged to receive the noise signal or a signal derived from the noise signal,
the second control input (20b) being arranged to receive the oscillator output signal or a signal derived from the same, and
the enabling device (20) being arranged to generate an output signal when the signal at the first control input (20a) exhibits a first trigger state, and when, subsequently, the signal at the second control input (20b) exhibits a second trigger state,
**characterized by** a sampling device (16) connected between an output of the noise signal generating device and an output of the random number generator, the noise signal being sampled when the sampling device (16) is in a sampling state, and the noise signal not being sampled when the sampling device (16) is in an idle state, and an output signal being generatable at the output (20c) of the enabling device (20), by which output signal the sampling device (16) is switchable from the idle state to the sampling state.

2. Random number generator as claimed in claim 1,
wherein the enabling device (20) is arranged to autonomously generate, after a sampling period, an output signal by which the sampling device (16) is brought into the idle state, or
wherein the sampling device (16) is arranged to autonomously return to the idle state after a predetermined sampling period.

3. Random number generator as claimed in claim 1 or 2,
wherein the enabling device (20) is arranged to respond to the first trigger state in the form of a rising edge of the signal at the first control input (20a), and
to respond to the second trigger state in the form of a rising edge of the signal at the second control input (20b).

4. Random number generator as claimed in any of the preceding claims, which further comprises:
a frequency divider (22) comprising an input and an output, the input of the frequency divider (22) being coupled to the output of the noise signal generating device (10), and
the output of the frequency divider being coupled to the first control input (20a) so as to supply the signal derived from the noise signal to the enabling device (20),
the signal derived from the noise signal having a frequency which, in accordance with a dividing ratio of the frequency divider (22), corresponds to a fraction of the frequency of the noise signal.

5. Random number generator as claimed in claim 4,
wherein the dividing ratio of the frequency divider (22) ranges from 1:50 to 1:150.

6. Random number generator as claimed in claim 4 or 5,
wherein the frequency of the alternating signal at the control oscillator output is in the order of magnitude of the frequency of the signal derived from the noise signal.

7. Random number generator as claimed in any of the preceding claims,
wherein the noise signal generating device (10) comprises the following:
a noise source (12) having an output for supplying a noisy wave form; and
a controllable oscillator (14) having a control input and a signal output,
the output of the noise source (12) being connected to the control input of the controllable oscillator (14).

8. Random number generator as claimed in claim 4, wherein the frequency divider (22) comprises a digital counter.

9. Random number generator as claimed in any of the preceding claims,
wherein the noise signal generating device (10) supplies a digital noise signal.

10. Random number generator as claimed in any of the preceding claims,
wherein the noise signal or the signal derived from the noise signal comprises a highest and a lowest frequency, and
wherein the frequency of the alternating signal of the control oscillator (18) is larger than the lowest frequency of the noise signal or of the signal derived from the noise signal.

11. Method for generating random numbers, comprising the following steps:
supplying (10) a noise signal;
supplying (18) a control alternating signal, the frequency of the control alternating signal not being rigidly coupled to the frequency of the noise signal;
signaling a sampling state when the noise signal or the signal derived from the noise signal is in a first trigger state and when, subsequently, the control alternating signal exhibits a second trigger state,
**characterized by** sampling the noise signal when a sampling state is present, and non-sampling the noise signal when an idle state is present.

12. Smart Card having a random number generator as claimed in any of claims 1 to 10.

## Revendications

1. Générateur de nombres aléatoires comportant les caractéristiques suivantes
- une installation à produire des signaux de bruit (10) pour fournir un signal de bruit,
- un oscillateur de commande (18) pour fournir un signal alternatif à une sortie d'oscillateur de commande, la fréquence du signal alternatif n'étant pas couplée une fois pour toutes à la fréquence du signal de bruit,
- une installation de déconnexion (20) munie d'une première entrée de commande (20a) et d'une deuxième entrée de commande (20b) et d'une sortie (20c),
- la première entrée de commande (20a) étant placée de manière à recevoir le signal de bruit ou un signal dérivé du signal de bruit,
- la deuxième entrée de commande (20b) étant placée de manière à recevoir le signal de sortie de l'oscillateur ou un signal qui en est dérivé et
- l'installation de déconnexion (20) étant placée de manière à produire un signal de sortie lorsque le signal à la première entrée de commande (20a) est dans un premier état de déclenchement et qu'ensuite le signal à la deuxième entrée de commande (20b) est dans un deuxième état de déclenchement,
**caractérisé par**
- une installation de balayage (16) montée entre une sortie de l'installation à produire des signaux de bruit et une sortie du générateur de nombres aléatoires, le signal de bruit étant balayé lorsque l'installation de balayage (16) est dans un état de balayage et le signal de bruit n'est pas balayé lorsque l'installation de balayage (16) est dans un état de repos,
- la possibilité de produire à la sortie (20c) de l'installation de déconnexion (20) un signal de sortie grâce auquel l'installation de balayage (16) peut passer de l'état de repos à l'état de balayage.

2. Générateur de nombres aléatoires selon la revendication 1, dans lequel
- l'installation de déconnexion (20) est placée de manière à produire automatiquement, après une période de balayage, un signal de sortie grâce auquel l'installation de balayage (16) est mise en état de repos,
- l'installation de balayage (16) est placée de manière à retourner automatiquement en état de repos après une période prédéfinie de balayage.

3. Générateur de nombres aléatoires selon la revendication 1 ou 2, dans lequel
- l'installation de déconnexion (20) est placée de manière à répondre au premier état de déclenchement quand le signal sur la première entrée de commande (20a) a un front croissant et
- au deuxième état de déclenchement quand le signal sur la deuxième entrée de commande (20b) a un front croissant.

4. Générateur de nombres aléatoires selon l'une des revendications précédentes, qui a en outre la caractéristique suivante
- un diviseur de fréquence (22) muni d'une entrée et d'une sortie,
- l'entrée du diviseur de fréquence (22) étant couplée à la sortie de l'installation à produire des signaux de bruit (10),
- la sortie du diviseur de fréquence étant couplée à la première entrée de commande (20a) pour fournir à l'installation de déconnexion (20) le signal dérivé du signal de bruit et
- le signal dérivé du signal de bruit ayant une fréquence qui correspond à une fraction de la fréquence que présente le signal de bruit d'après un rapport de division du diviseur de fréquence (22).

5. Générateur de nombres aléatoires selon la revendication 4, dans lequel le rapport de division du diviseur de fréquence (22) est compris entre 1 : 50 et 1 : 150.

6. Générateur de nombres aléatoires selon la revendication 4 ou 5, dans lequel
la fréquence du signal alternatif à la sortie de l'oscillateur de commande a l'ordre de grandeur de la fréquence que présente le signal dérivé du signal de bruit.

7. Générateur de nombres aléatoires selon l'une des revendications précédentes, dans lequel l'installation à produire des signaux de bruit (10) a les caractéristiques suivantes
- une source de bruit (12) comportant une sortie pour fournir une forme de signal de bruit,
- un oscillateur (14) réglable comportant une entrée de commande et une sortie de signal,
- la sortie de la source de bruit (12) étant reliée à l'entrée de commande de l'oscillateur (14) réglable.

8. Générateur de nombres aléatoires selon la revendication 4, dans lequel le diviseur de fréquence (22) a un compteur numérique.

9. Générateur de nombres aléatoires selon l'une des revendications précédentes, dans lequel
l'installation à produire des signaux de bruit (10) fournit un signal de bruit numérique.

10. Générateur de nombres aléatoires selon l'une des revendications précédentes, dans lequel
le signal de bruit ou le signal dérivé du signal de bruit a une fréquence maximale et une fréquence minimale, et
dans lequel la fréquence du signal alternatif de l'oscillateur (18) de commande est plus élevée que la fréquence la plus basse du signal de bruit ou du signal dérivé du signal de bruit.

11. Procédé pour produire des nombres aléatoires dont les étapes sont les suivantes :
- fournir (10) un signal de bruit,
- fournir (18) un signal alternatif de commande, la fréquence du signal alternatif de commande n'étant pas couplée une fois pour toutes à la fréquence du signal de bruit,
- signaler l'état de balayage lorsque le signal de bruit ou le signal dérivé du signal de bruit a un premier état de déclenchement et qu'ensuite le signal alternatif de commande a un deuxième état de déclenchement,
**caractérisé en ce que**
- le signal de bruit est balayé en présence d'un état de balayage, le signal de bruit n'est pas balayé en présence d'un état de repos.

12. Carte à mémoire équipée d'un générateur de nombres aléatoires d'après l'une des revendications 1 à 10.
